# EUROPEAN PATENT APPLICATION

(11) **EP 4 557 405 A1**
(43) Date of publication of application: **21.05.2025**
(21) Application number: 23839407.6
(22) Date of filing: 19.06.2023
(51) Int. Cl.: H01M 4/62, H01M 4/13

(54) **LITHIUM SECONDARY BATTERY ELECTRODE BINDER, ELECTRODE BINDER COMPOSITION, NEGATIVE ELECTRODE, AND LITHIUM SECONDARY BATTERY**

(30) Priority: 14.07.2022 JP 2022113448
(71) Applicant: DKS Co. Ltd., Kyoto-shi, Kyoto 600-8873 (JP)
(72) Inventor: KANEKO, Fumiya, kyoto-shi, Kyoto 600-8873 (JP); ISHIDA, Hisayuki, kyoto-shi, Kyoto 600-8873 (JP); SAKAMOTO, Koichi, kyoto-shi, Kyoto 600-8873 (JP); KAJI, Soki, kyoto-shi, Kyoto 600-8873 (JP); NISHIKAWA, Akiyoshi, kyoto-shi, Kyoto 600-8873 (JP)
(74) Representative: TBK
(86) International application number: PCT/JP2023/022527
(87) International publication number: WO 2024/014232

(57) **Abstract**

To provide an electrode binder that is used for a lithium secondary battery and that can reduce swelling of an electrode caused by charging and discharging.

An electrode binder for a lithium secondary battery according to an embodiment contains an aqueous dispersion of a polyurethane sodium salt obtained by causing a reaction of (A) at least one of an aliphatic polyisocyanate or an alicyclic polyisocyanate, (B) a hydrogenated polybutadiene polyol, (C) a carboxylic acid having one or more active hydrogen groups, and (D) a chain extender.

## Description

### Technical Field

Embodiments of the present invention relate to an electrode binder for a lithium secondary battery, an electrode binder composition, a negative electrode, and a lithium secondary battery.

### Background Art

Lithium secondary batteries are also referred to as lithium-ion secondary batteries and are used, as highvoltage and high-energy-density storage devices, in power sources for driving electronic devices, for example. An electrode of such a lithium secondary battery is ordinarily produced by applying, to the surface of a current collector, a mixture of an electrode active material, a conductive agent, and a binder, and drying the mixture. The binder is used in order to impart adhesion between the electrode active material and the current collector. Thus, the binder considerably affects properties of the lithium secondary battery.

As an electrode binder for a lithium secondary battery, Patent Literature 1 discloses an electrode binder containing an aqueous dispersion of a polyurethane prepared from polyisocyanate, an olefin-based polyol, a compound having one or more active hydrogen groups and a hydrophilic group, and a chain extender. Patent Literature 1 also discloses that the olefin-based polyol employed is one or two or more selected from polybutadiene polyol, polyisoprene polyol, hydrogenated polybutadiene polyol, and hydrogenated polyisoprene polyol. Patent Literature 1 further discloses, as the compound having an active hydrogen group and a hydrophilic group, carboxylic acid-containing compounds and salts thereof.

Patent Literature 2 discloses, for an electrode binder composition that provides, even in the case of using an active material that considerably varies in volume, an electrode having high durability, a combined use of polyurethane and a fibrous nanocarbon material. Patent Literature 2 also discloses that the polyurethane employed is obtained by causing a reaction of polyisocyanate, a polyol, a compound having one or more active hydrogen groups and a hydrophilic group, and a chain extender. Patent Literature 2 further discloses that the polyol employed is one or two or more selected from polybutadiene polyol, polyisoprene polyol, hydrogenated polybutadiene polyol, and hydrogenated polyisoprene polyol. Patent Literature 2 also discloses that the compound having an active hydrogen group and a hydrophilic group employed is a carboxylic acid-containing compound and a salt thereof.

### Citation List

### Patent Literature

PTL 1: International Publication No. 2015/019598
PTL 2: International Publication No. 2020/217730

### Summary of Invention

### Technical Problem

For example, when a negative-electrode active material contains SiO, charging and discharging cause the electrode to swell, which results in deterioration of the performance of the lithium secondary battery. Thus, swelling of the electrode caused by charging and discharging needs to be reduced.

The above-described PTLs 1 and 2 disclose that, for the polyurethane used as the binder, the polyol employed may be, in addition to polybutadiene polyol or polyisoprene polyol, a hydrogenated polyol thereof and that the compound having an active hydrogen group and a hydrophilic group employed may be a carboxylic acid-containing compound and a salt thereof. However, the PTLs do not disclose a combination of hydrogenated polybutadiene polyol and sodium salt of carboxylic acid and also do not disclose the resultant reduction of swelling of the electrode caused by charging and discharging.

An object of an embodiment of the present invention is to provide an electrode binder that is used for a lithium secondary battery and can reduce swelling of the electrode caused by charging and discharging.

### Solution to Problem

The present invention includes the following embodiments.
[1] An electrode binder for a lithium secondary battery, the electrode binder containing an aqueous dispersion of a polyurethane sodium salt obtained by causing a reaction of (A) at least one of an aliphatic polyisocyanate or an alicyclic polyisocyanate, (B) a hydrogenated polybutadiene polyol, (C) a carboxylic acid having one or more active hydrogen groups, and (D) a chain extender.
[2] The electrode binder according to [1], being used for a negative electrode of a lithium secondary battery containing SiO as a negative-electrode active material.
[3] An electrode binder composition for a lithium secondary battery, the electrode binder composition containing a polyurethane sodium salt obtained by causing a reaction of (A) at least one of an aliphatic polyisocyanate or an alicyclic polyisocyanate, (B) a hydrogenated polybutadiene polyol, (C) a carboxylic acid having one or more active hydrogen groups, and (D) a chain extender; a conductive agent; and water.
[4] The electrode binder composition according to [3], wherein the conductive agent contains fibrous nanocarbon.
[5] A negative electrode of a lithium secondary battery, the negative electrode containing the electrode binder according to [1] or [2] or a solid content of the electrode binder composition according to [3] or [4], and a negative-electrode active material containing SiO.
[6] The negative electrode according to [5], containing fibrous nanocarbon as a conductive agent.
[7] A lithium secondary battery including the negative electrode according to [5] or [6].

### Advantageous Effects of Invention

Embodiments according to the present invention can reduce swelling of an electrode caused by charging and discharging.

### Description of Embodiments

An electrode binder for a lithium secondary battery according to an embodiment contains an aqueous dispersion of a polyurethane sodium salt (hereafter, may also be simply referred to as "polyurethane") obtained by causing a reaction of a component (A) that is at least one of an aliphatic polyisocyanate or an alicyclic polyisocyanate, a component (B) that is a hydrogenated polybutadiene polyol, a component (C) that is a carboxylic acid having one or more active hydrogen groups, and (D) that is a chain extender.

In general, when an electrode active material contains SiO, charging and discharging of the lithium secondary battery results in swelling of the electrode. By contrast, the electrode binder according to the embodiment can reduce swelling of the electrode even when the electrode active material contains SiO. When an electrode active material contains SiO and the carboxy group derived from the carboxylic acid is amine salt, gas tends to be generated. By contrast, when the carboxy group is sodium salt, generation of gas can be suppressed.

### [(A) At least one of aliphatic polyisocyanate or alicyclic polyisocyanate]

In the embodiment, the polyisocyanate employed is (A) an aliphatic polyisocyanate and/or an alicyclic polyisocyanate.

Examples of the aliphatic polyisocyanate include tetramethylene diisocyanate, dodecamethylene diisocyanate, hexamethylene diisocyanate (HDI), 2,2,4-trimethylhexamethylene diisocyanate, 2,4,4-trimethylhexamethylene diisocyanate, lysine diisocyanate, 2-methylpentane-1,5-diisocyanate, and 3-methylpentane-1,5-diisocyanate. These can be used alone or in combination of two or more thereof.

Examples of the alicyclic polyisocyanate include isophorone diisocyanate (IPDI), dicyclohexylmethane 4,4'-diisocyanate (hydrogenated MDI), hydrogenated xylylene diisocyanate, 1,4-cyclohexane diisocyanate, methylcyclohexylene diisocyanate, and 1,3-bis(isocyanatomethyl)cyclohexane. These can be used alone or in combination of two or more thereof.

The amount of the component (A) is not particularly limited and may be, for example, relative to 100 mass% of the polyurethane, 5 to 40 mass%, or may be 10 to 30 mass%.

### [(B) Hydrogenated polybutadiene polyol]

In the embodiment, the polyol employed is (B) a hydrogenated polybutadiene polyol. The hydrogenated polybutadiene polyol combined with the sodium salt of the carboxylic acid can reduce swelling of the electrode after charging and discharging.

The hydrogenated polybutadiene polyol employed preferably has 1.3 or more hydroxy groups per molecule on average, more preferably has 1.5 to 2.5 hydroxy groups on average, and still more preferably has 1.7 to 2.2 hydroxy groups on average. In this Description, the number of hydroxy groups (number of functional groups) per molecule is a value calculated by the following formula. Number of functional groups = {(Hydroxyl value) × (Mn)}/(56.1 × 1000)

The hydrogenated polybutadiene polyol employed is preferably a polybutadiene polyol that has a polybutadiene structure of a 1,4-bond type, a 1,2-bond type, or a mixture thereof in the molecule, and that has a structure in which a polybutadiene polyol having a hydroxy group at an end is hydrogenated (hydrogenation). The hydrogenated polybutadiene polyol more preferably has a structure in which a polybutadiene polyol having hydroxy groups at both ends of the polybutadiene structure is hydrogenated.

In the hydrogenated polybutadiene polyol, a part of or all of the unsaturated double bonds included in the polybutadiene polyol are hydrogenated. The degree of hydrogenation of the hydrogenated polybutadiene polyol is not particularly limited and, for example, the iodine number may be 40 g/100 g or less, may be 30 g/100 g or less, may be 25 g/100 g or less, or may be 15 g/100 g or less. In this Description, the iodine number is measured in accordance with JIS K0070:1992.

The molecular weight of the hydrogenated polybutadiene polyol is not particularly limited and, for example, the number-average molecular weight (Mn) may be 600 to 10000, may be 800 to 6000, may be 1000 to 5000, or may be 1200 to 4000.

In this Description, the number-average molecular weight (Mn) is a value measured by the GPC method (gel permeation chromatography) and calculated using a calibration curve provided using standard polystyrenes. Specifically, the measurement can be performed under GPC conditions of a column "TSKgel Hxl" manufactured by Tosoh Corporation, a mobile phase of THF (tetrahydrofuran), a mobile-phase flow rate of 1.0 mL/min, a column temperature of 40°C, a sample injection amount of 50 µL, and a sample concentration of 0.2 mass%.

The hydroxyl value of the hydrogenated polybutadiene polyol is not particularly limited and, for example, may be 10 to 200 mgKOH/g, may be 15 to 120 mgKOH/g, may be 20 to 100 mgKOH/g, or may be 50 to 90 mgKOH/g. In this Description, the hydroxyl value is measured in accordance with the method A of JIS K1557-1:2007.

The amount of the component (B) that is a hydrogenated polybutadiene polyol is not particularly limited, but is, relative to 100 mass% of the polyurethane, preferably 40 to 90 mass%, more preferably 50 to 80 mass%.

### [(C) Carboxylic acid having one or more active hydrogen groups]

In the embodiment, the compounds having an active hydrogen group employed are, in addition to the (B) hydrogenated polybutadiene polyol, (C) a carboxylic acid having one or more active hydrogen groups. The (C) carboxylic acid having one or more active hydrogen groups is a compound having one or more active hydrogen groups and a carboxy group. The number of active hydrogen groups of the carboxylic acid may be 1 to 3, more preferably 1 or 2. Such an active hydrogen group is a group including an active hydrogen that reacts with an isocyanate group and examples include a hydroxy group, a primary amino group (-NH₂), and a secondary amino group (-NHR).

The carboxy group used herein is a concept including not only the acid type (-COOH), but also the salt type, namely, a carboxylate group (-COOX, X: a cation that forms salt with the carboxylic acid); a mixture of the acid type and the salt type may be used. Note that, in the polyurethane contained in the electrode binder or the electrode binder composition, the carboxy group derived from the carboxylic acid is present as sodium salt (-COONa). As a result, even when the electrode active material contains SiO, swelling of the electrode caused by charging and discharging can be reduced and generation of gas can be suppressed.

Examples of the carboxylic acid having one or more active hydrogen groups include hydroxy acids such as dimethylolpropionic acid, dimethylolbutanoic acid, dimethylolvaleric acid, dihydroxymaleic acid, dihydroxybenzoic acid, and diaminobenzoic acid, derivatives of the hydroxy acids, and salts of the foregoing. Other examples of the carboxylic acid having one or more active hydrogen groups include amino acids such as alanine, aminobutyric acid, aminocaproic acid, glycine, glutamic acid, aspartic acid, and histidine. These may be used alone or in combination of two or more thereof.

The carboxy group can be neutralized into salt, so that the polyurethane finally obtained becomes dispersible in water. In this case, the neutralizer employed is preferably sodium hydroxide in the embodiment. The neutralization can be performed before, during, or after the urethane-forming reaction.

The amount of the component (C) that is a carboxylic acid having one or more active hydrogen groups is not particularly limited, but the acid value indicating the content of carboxy groups in the polyurethane is preferably 5 to 50 mgKOH/g, more preferably 5 to 45 mgKOH/g or less. When the polyurethane has an acid value of 5 mgKOH/g or more, the dispersibility in water can be improved; when the acid value is 50 mgKOH/g or less, the electrolyte-solution resistance can be improved. In this Description, the acid value can be determined, in accordance with JIS K0070-1992, from the amount of KOH (mg) consumed to neutralize free carboxyl groups contained in 1 g of the solid content of the polyurethane aqueous dispersion.

The amount of the component (C) is not particularly limited and may be, for example, relative to 100 mass% of the polyurethane, 1 to 15 mass%, or may be 2 to 10 mass%.

### [(D) Chain extender]

The component (D) that is a chain extender employed can be a chain extender generally used in the technical field. Specifically, the chain extender is preferably an amine such as a diamine or a polyamine. Examples of the diamine include ethylenediamine, trimethylenediamine, piperazine, and isophoronediamine. Examples of the polyamine include diethylenetriamine, dipropylenetriamine, and triethylenetetramine. These may be used alone or in combination of two or more thereof.

The amount of the component (D) is not particularly limited and may be, for example, relative to 100 mass% of the polyurethane, 0.3 to 10 mass%, or may be 0.5 to 5 mass%.

### [Electrode binder]

The electrode binder according to the embodiment contains an aqueous dispersion of a polyurethane sodium salt obtained by causing a reaction of the components (A) to (D). Specifically, the polyurethane obtained by causing the reaction of the components (A) to (D) is dispersed in water such that the carboxy group derived from the component (C) has the form of sodium salt. Thus, the electrode binder contains water and the polyurethane sodium salt dispersed in water.

The polyurethane may be composed of the components (A) to (D) alone, but may contain, as a polyisocyanate, a polyisocyanate other than the component (A), such as an aromatic polyisocyanate or an aromatic aliphatic polyisocyanate unless advantages of the embodiment are not impaired. The polyurethane may contain, as a polyol, a polyol other than the component (B), such as polyether polyol, polyester polyol, polycarbonate polyol, or a polyhydric alcohol such as ethylene glycol, propylene glycol, diethylene glycol, trimethylolpropane, or glycerol.

In the electrode binder, the concentration of the polyurethane is not particularly limited and may be, for example, 5 to 50 mass%, or may be 10 to 40 mass%.

The method for producing the aqueous dispersion of a polyurethane sodium salt is not particularly limited, but, for example, the following method is used. The component (B) and the component (C) are subjected to a reaction with the component (A) without solvents or within an organic solvent not having active hydrogen groups to synthesize an isocyanate-terminated urethane prepolymer. In this case, the component (A) is used such that the amount of isocyanate groups is stoichiometrically excessive relative to the total amount of active hydrogen groups included in the component (B) and the component (C), for example, the equivalent ratio of the isocyanate groups to the active hydrogen groups is 1: 0.85 to 0.99. After synthesis of the urethane prepolymer, sodium hydroxide is used to neutralize the carboxy group of the component (C) and the urethane prepolymer is dispersed and emulsified in water. Subsequently, the (D) chain extender is added in an equivalent amount smaller than that of the remaining isocyanate groups (for example, in an equivalent ratio of, the isocyanate groups to the active hydrogen groups of the chain extender, 1:0.50 to 0.95), to subject isocyanate groups in emulsification micelles and the chain extender to interfacial polymerization reaction, to generate urea bonds. This increases the crosslinking density within the emulsification micelles, to form three-dimensional crosslinked structures. Subsequently, the solvent having been used is removed as needed, to thereby provide an aqueous dispersion of a polyurethane sodium salt.

In the above-described synthesis of the urethane prepolymer, an organic solvent that is inactive with isocyanate groups and that can dissolve the generated urethane prepolymer may be used. Examples of the organic solvent include dioxane, methyl ethyl ketone, acetone, dimethylformamide, tetrahydrofuran, N-methyl-2-pyrrolidone, toluene, and propylene glycol monomethyl ether acetate. In the electrode binder according to the embodiment, the medium in which the polyurethane sodium salt is dispersed may contain, in addition to water, such an organic solvent or may not contain such an organic solvent. Such an organic solvent is preferably removed in the end.

In the embodiment, the average particle size of the aqueous dispersion of a polyurethane sodium salt is not particularly limited and may be, for example, in the range of 0.005 to 0.5 µm. The number-average molecular weight (Mn) of the polyurethane sodium salt is not particularly limited and may be, for example, 10,000 or more, or may be 50,000 or more.

### [Electrode binder composition]

An electrode binder composition of a lithium secondary battery according to an embodiment contains the above-described polyurethane sodium salt obtained by causing the reaction of the components (A) to (D), a conductive agent, and water. Specifically, the electrode binder composition contains the polyurethane sodium salt and the conductive agent that are dispersed in water. The electrode binder composition may be prepared by, for example, mixing together the aqueous dispersion of the polyurethane sodium salt and an aqueous dispersion of the conductive agent.

The conductive agent employed can be an electronconduction material that does not adversely affect the battery performance. Specific examples of the conductive agent include fibrous nanocarbon, carbon blacks such as acetylene black and Ketjenblack, natural graphites (such as vein graphite, flake graphite, and amorphous graphite), artificial graphite, carbon whisker, carbon fiber, metal (such as copper, nickel, aluminum, silver, or gold) powders, metallic fiber, and conductive materials such as conductive ceramic materials. These can be used alone or in combination of two or more thereof.

The conductive agent employed is preferably fibrous nanocarbon. The fibrous nanocarbon can follow swelling of an electrode in which the electrode active material contains SiO, and can suppress damage to the conductive path during repeated charging and discharging.

The fibrous nanocarbon is a fibrous carbon having a fiber diameter on the order of nanometers. The average fiber length of the fibrous nanocarbon is not particularly limited and is preferably, for example, 50 nm to 10 mm, more preferably 0.5 to 100 µm. The average fiber diameter of the fibrous nanocarbon is not particularly limited and is preferably, for example, 0.5 to 200 nm, more preferably 1 to 100 nm. The average fiber length and the average fiber diameter can be determined as follows: in an atomic force microscope (AFM) image, 50 fibrous nanocarbon fibers randomly selected are measured for sizes and arithmetic means of the sizes are determined. For a length on the order of millimeters, which cannot be measured with atomic force microscopes, the length may be measured using an image captured with a microscope.

Specific examples of the fibrous nanocarbon include single-walled carbon nanotube (SWCNT), multi-walled carbon nanotube (MWCNT), and nanocarbon fiber. These can be used alone or in combination of two or more thereof. Of these, preferred is carbon nanotube, and more preferred is SWCNT.

A binder composition according to an embodiment preferably contains the polyurethane sodium salt (X) and the fibrous nanocarbon (Y) in (X): (Y) = 60:40 to 99.6:0.4 (mass ratio). This can enhance the effect of improving the charging-discharging cycle performance of the lithium secondary battery.

A binder composition according to an embodiment preferably contains, as conductive agents, in addition to the fibrous nanocarbon, carbon black. In this case, the carbon black serves as a conductive additive to ensure current flow around the electrode active material, so that the conductivity of the fibrous nanocarbon following swelling of the electrode can be more effectively exhibited. The content ratio of the fibrous nanocarbon to the carbon black is not particularly limited; for example, 100 to 2000 parts by mass of the carbon black may be contained relative to 100 parts by mass of the fibrous nanocarbon.

The conductive agent is preferably used while being dispersed in a medium. The medium is ordinarily water, or may be a polar organic solvent such as alcohol or a ketonebased solvent, or a solvent mixture of such a polar organic solvent and water. Examples of the dispersing apparatus for dispersing the conductive agent in a medium include jet mills, high-pressure dispersing apparatuses, and ultrasonic homogenizers.

When an aqueous dispersion in which a conductive agent such as fibrous nanocarbon or carbon black is dispersed in water is prepared, a dispersing agent may be added. Examples of the dispersing agent include celluloses such as hydroxymethylcellulose, carboxymethylcellulose, alkali metal salts of the foregoing, methylcellulose, ethylcellulose, hydroxypropylmethylcellulose, and hydroxyethylmethylcellulose, cellulose nanofiber, polycarboxylic acid-based compounds such as polyacrylic acid and sodium polyacrylate, compounds having a vinylpyrrolidone structure such as polyvinylpyrrolidone, polyvinyl alcohol, sodium alginate, xanthan gum, carrageenan, guar gum, agar, and starch. Of these, carboxymethylcellulose salts are preferably used.

In the electrode binder composition, the concentration of the polyurethane is not particularly limited and may be, for example, 5 to 50 mass%, or may be 10 to 40 mass%. The concentration of the conductive agent is also not particularly limited and may be, for example, 5 to 35 mass%, or may be 15 to 30 mass%.

### [Electrode coating-liquid composition]

The electrode binder and the electrode binder composition according to the embodiments are used for preparing an electrode coating-liquid composition for producing an electrode of a lithium secondary battery. In the case of using the electrode binder, an electrode coating-liquid composition (1) contains the electrode binder, an electrode active material, and a conductive agent. In the case of using the electrode binder composition, an electrode coating-liquid composition (2) contains the electrode binder composition and an electrode active material.

These electrode coating-liquid compositions are preferably used for producing negative electrodes of lithium secondary batteries. Thus, the electrode active material is preferably a negative-electrode active material. The negative-electrode active material employed can be a material that is intercalated/deintercalated by metallic lithium or lithium ions. Specific examples of the negative-electrode active material include carbon materials such as natural graphite, artificial graphite, non-graphitizing carbon, and graphitizing carbon, metallic materials such as metallic lithium, alloys, and tin compounds, lithium transition-metal nitrides, crystalline metal oxides, amorphous metal oxides, silicon compounds, and conductive polymers. These may be used alone or in combination of two or more thereof.

Of these, from the viewpoint of increasing the capacity, the negative-electrode active material preferably contains SiO (silicon monooxide). The negative-electrode active material may be a mixture of SiO and graphite; but, preferably, SiO alone is used as the negative-electrode active material.

In the electrode coating-liquid composition, the content of the polyurethane sodium salt is not particularly limited, but is preferably, relative to the content of the electrode active material (negative-electrode active material), 1 to 20 mass%, more preferably 2 to 13 mass%.

In the electrode coating-liquid composition (1), the conductive agent is as described above in the electrode binder composition in terms of specific examples, preferred compositions, and the like and hence will not be described again.

In the electrode coating-liquid composition, the content of the conductive agent is not particularly limited, but is preferably, relative to the content of the electrode active material (negative-electrode active material), 0.1 to 20 mass%, more preferably 0.2 to 10 mass%.

The electrode coating-liquid composition may contain, as a viscosity modifier for turning the composition into slurry, a thickener such as a water-soluble polymer. Examples of the thickener include celluloses such as carboxymethylcellulose salts, methylcellulose, ethylcellulose, hydroxymethylcellulose, hydroxypropylmethylcellulose, and hydroxyethylmethylcellulose, polycarboxylic acid-based compounds such as polyacrylic acid and sodium polyacrylate, compounds having a vinylpyrrolidone structure such as polyvinylpyrrolidone, polyacrylamide, polyethylene oxide, polyvinyl alcohol, sodium alginate, xanthan gum, carrageenan, guar gum, agar, and starch. These can be used alone or in combination of two or more thereof. Of these, carboxymethylcellulose salts are preferred.

In the solid content of the electrode coating-liquid composition, the content of the electrode active material (negative-electrode active material) is not particularly limited and may be, for example, 65 to 99 mass%, or may be 75 to 97 mass%. In the electrode coating-liquid composition, the content of the dispersion medium such as water is not particularly limited and may be, for example, 20 to 80 mass%, or may be 40 to 70 mass%.

The method for preparing the electrode coating-liquid composition is not particularly limited. When the aboveobtained components are mixed together, for example, a mortar, a mill mixer, a ball mill such as a planetary ball mill or a shaker ball mill, or MECHANO FUSION can be used.

### [Negative electrode of lithium secondary battery]

A negative electrode of a lithium secondary battery according to an embodiment can be produced by applying the above-described electrode coating-liquid composition to a current collector, and evaporating the dispersion medium. In other words, the negative electrode includes a current collector and a negative-electrode mixture layer (also referred to as an active-material layer) formed on the current collector, wherein the negative-electrode mixture layer is formed of the solid of the electrode coating-liquid composition. In an embodiment, the electrode coating-liquid composition contains, in addition to the electrode binder or the electrode binder composition, SiO as a negative-electrode active material. Thus, the negative electrode of a lithium secondary battery according to an embodiment contains the solid of the electrode binder or the electrode binder composition and the negative-electrode active material containing SiO.

The current collector employed can be an electronconduction body that does not adversely affect the battery constituted by the current collector. The current collector for the negative electrode may be formed of, for example, copper, stainless steel, nickel, aluminum, titanium, baked carbon, conductive polymer, conductive glass, or Al-Cd alloy, or may be formed of copper or the like and having a surface treated with carbon, nickel, titanium, silver, or the like in order to improve adhesiveness, conductivity, and oxidation resistance. Such a current collector material may have a surface subjected to oxidation treatment. The current collector may have a shape of, for example, a foil, a film, a sheet, a net, a punched or expanded body, or a shaped body such as a lath body, a porous body, or a foam body. The thickness of the current collector employed is not particularly limited, but is ordinarily 1 to 100 µm.

The thickness of the negative-electrode mixture layer is not particularly limited and may be, for example, 15 to 150 µm.

### [Lithium secondary battery]

A lithium secondary battery according to an embodiment includes the above-described negative electrode. Specifically, the lithium secondary battery includes a negative electrode, a positive electrode, a separator disposed between the negative electrode and the positive electrode, and electrolyte, wherein the negative electrode employed is an electrode produced using the above-described electrode coating-liquid composition. The positive electrode, the separator, and the electrolyte are not particularly limited and, for example, publicly known configurations described in PTL 1 or PTL 2 above can be employed.

The lithium secondary battery according to the embodiment can be formed into a cylindrical shape, a coin shape, a prismatic shape, or another desirable shape; the basic configuration of the battery is the same regardless of the shape of the battery and the battery can be provided such that the design is changed in accordance with the purpose. For example, the cylindrical shape is obtained in the following manner: a negative electrode prepared by coating a negative-electrode current collector with a negative-electrode active material and a positive electrode prepared by coating a positive-electrode current collector with a positive-electrode active material are wound with a separator therebetween; the resultant wound body is placed into a battery casing; a nonaqueous electrolyte solution is injected; the contents over and under which insulation plates are disposed are sealed. Alternatively, in the case of application to a coin-shaped lithium secondary battery, a disc-shaped negative electrode, a separator, a disc-shaped positive electrode, and a stainless steel plate are stacked and placed into a coin-shaped battery casing; a nonaqueous electrolyte solution is injected and sealed.

### EXAMPLES

Hereinafter, the present invention will be described further in detail on the basis of Examples and Comparative Examples; however, the present invention is not limited thereto.

Polyols, a fibrous nanocarbon aqueous dispersion 1, a fibrous nanocarbon aqueous dispersion 2, an acetylene black aqueous dispersion, and a carboxymethylcellulose sodium salt used in EXAMPLES will be described as follows.

·Hydrogenated polybutadiene polyol (A1): manufactured by Nippon Soda Co., Ltd., "NISSO-PB GI-1000" (Mn: 1500, iodine number: 11 g/100 g, hydroxyl value: 69 KOHmg/g, number of functional groups: 1.8)
·Hydrogenated polybutadiene polyol (A2): manufactured by Nippon Soda Co., Ltd., "NISSO-PB GI-3000" (Mn: 3100, iodine number: 12 g/100 g, hydroxyl value: 30 KOHmg/g, number of functional groups: 1.7)
·Polybutadiene polyol: manufactured by Nippon Soda Co., Ltd., "NISSO-PB G-1000" (Mn: 1400, hydroxyl value: 70 KOHmg/g, number of functional groups: 1.7)
·Polyisoprene polyol: manufactured by Idemitsu Kosan Co., Ltd., "Polyip" (Mn: 2500, hydroxyl value: 47 KOHmg/g, number of functional groups: 2.1)
·Fibrous nanocarbon aqueous dispersion 1: as single-walled carbon nanotube (SWCNT), "TUBALL BATT" manufactured by OCSiAl (CNT purity > 93%, average diameter: 1.6 ± 0.5 nm) was used and production procedures below were performed to prepare a fibrous nanocarbon aqueous dispersion 1 having a fibrous nanocarbon concentration of 1 mass%. The obtained aqueous dispersion 1 was measured, by measurement methods below, for the average fiber diameter, the average fiber length, and the aspect ratio of the fibrous nanocarbon; as a result, the average fiber diameter was 3 nm, the average fiber length was 3000 nm, and the aspect ratio was 1000.

### (Production procedures of fibrous nanocarbon aqueous dispersion)

SWCNT (0.5 g) was placed into 50 g of a 1 mass% aqueous solution of carboxymethylcellulose salt (manufactured by DAI-ICHI KOGYO SEIYAKU CO., LTD., "CELLOGEN 7A") and mixed in a beaker and stirred; subsequently, the beaker, an ultrasonic homogenizer (US-600T, manufactured by NIHONSEIKI KAISHA LTD.), a circulation unit, and a tube pump were used such that the slurry being circulated was subjected to dispersion at an output of 100 µA for 90 minutes, to obtain a fibrous nanocarbon aqueous dispersion.

### (Measurement methods of fibrous nanocarbon)

The fibrous nanocarbon was measured, in terms of average fiber diameter and average fiber length, using a scanning probe microscope (SPM) (manufactured by JEOL Ltd., AFM-5300E). Specifically, a fibrous nanocarbon aqueous dispersion was diluted with water until the fibrous nanocarbon concentration reached 0.01 mass%, and subsequently spread over a mica substrate to evaporate the solvent. An AFM image of this sample was observed and the average fiber diameter and the average fiber length were calculated in accordance with the above-described method. In addition, these values were used to calculate the aspect ratio by the following (formula 1). Aspect ratio = Average fiber length (nm)/Average fiber diameter (nm) (formula 1)

·Fibrous nanocarbon aqueous dispersion 2: as single-walled carbon nanotube (SWCNT), "HCNT2" manufactured by SUSN NANOTECH Co., Ltd. (CNT purity > 96%, average diameter: 1 to 4 nm) was used and the same production procedures as for the aqueous dispersion 1 were performed to prepare a fibrous nanocarbon aqueous dispersion 2 having a fibrous nanocarbon concentration of 1 mass%. The obtained aqueous dispersion 2 was measured, by the above-described measurement methods, in terms of the average fiber diameter, the average fiber length, and the aspect ratio of the fibrous nanocarbon; as a result, the average fiber diameter was 3 nm, the average fiber length was 35000 nm, and the aspect ratio was 11666.
·Acetylene black aqueous dispersion: as acetylene black, "Li400" manufactured by Denka Company Limited was used. The acetylene black (100 g) was added to 300 g of a 1 mass% aqueous solution of carboxymethylcellulose salt (manufactured by DAI-ICHI KOGYO SEIYAKU CO., LTD., "CELLOGEN 7A") under stirring using a high-speed disper and stirring was performed until the content became homogeneous. This provided an acetylene black aqueous dispersion having an acetylene black concentration of 25 mass%.
·Carboxymethylcellulose sodium salt: manufactured by DAI-ICHI KOGYO SEIYAKU CO., LTD., "CELLOGEN BSH-6"

### [Synthesis of aqueous dispersion of polyurethane]

### (Production Example 1: binder 1)

To a four-neck flask equipped with a stirrer, a reflux condenser, a thermometer, and a nitrogen inlet tube, 69.17 parts by mass of the hydrogenated polybutadiene polyol (A1), 4.17 parts by mass of dimethylolpropionic acid, 25.97 parts by mass of dicyclohexylmethane 4,4'-diisocyanate (hydrogenated MDI), and 150 parts by mass of methyl ethyl ketone were added and caused to react at 75°C for 4 hours, to obtain a methyl ethyl ketone solution of a urethane prepolymer having a free-isocyanate-group content of 2.1 mass% relative to the non-volatile content. This solution was cooled to 45°C; an aqueous sodium hydroxide solution composed of 1.24 parts by mass of sodium hydroxide and 233 parts by mass of water was gradually added and a homogenizer was used to perform emulsification and dispersion. Subsequently, an aqueous solution prepared by diluting 1.48 parts by mass of diethylenetriamine with 37 parts by mass of water was added and a chain extension reaction was caused for 1 hour. This was subjected to reduced pressure and removal of the solvent under heating at 50°C, to obtain an aqueous dispersion of polyurethane sodium salt having a non-volatile content of about 32 mass% (binder 1).

### (Production Example 2: binder 2)

The same procedures as in Production Example 1 were performed except that 25.97 parts by mass of hydrogenated MDI was replaced by 25.97 parts by mass of isophorone diisocyanate (IPDI) and the amount of diethylenetriamine was changed to 2.57 parts by mass, to obtain an aqueous dispersion of polyurethane sodium salt having a non-volatile content of about 32 mass% (binder 2).

### (Production Example 3: binder 3)

The same procedures as in Production Example 1 were performed except that 25.97 parts by mass of hydrogenated MDI was replaced by 25.97 parts by mass of hexamethylene diisocyanate (HDI) and the amount of diethylenetriamine was changed to 4.9 parts by mass, to obtain an aqueous dispersion of polyurethane sodium salt having a non-volatile content of about 32 mass% (binder 3).

### (Production Example 4: binder 4)

The same procedures as in Production Example 1 were performed except that 69.17 parts by mass of the hydrogenated polybutadiene polyol (A1) was replaced by 69.17 parts by mass of the hydrogenated polybutadiene polyol (A2) and the amount of diethylenetriamine was changed to 2.94 parts by mass, to obtain an aqueous dispersion of polyurethane sodium salt having a non-volatile content of about 32 mass% (binder 4).

### (Production Example 5: binder 5)

The same procedures as in Production Example 1 were performed except that 4.17 parts by mass of dimethylolpropionic acid was replaced by 4.17 parts by mass of dimethylolbutanoic acid, the amount of the hydrogenated polybutadiene polyol (A1) was changed to 69.22 parts by mass, the amount of hydrogenated MDI was changed to 25.99 parts by mass, the amount of sodium hydroxide was changed to 1.13 parts by mass, and the amount of diethylenetriamine was changed to 2.26 parts by mass, to obtain an aqueous dispersion of polyurethane sodium salt having a non-volatile content of about 32 mass% (binder 5).

### (Production Example 6: binder 6)

The same procedures as in Production Example 1 were performed except that 1.48 parts by mass of diethylenetriamine was replaced by 1.29 parts by mass of ethylenediamine, to obtain an aqueous dispersion of polyurethane sodium salt having a non-volatile content of about 32 mass% (binder 6).

### (Production Example 7: binder 7)

The same procedures as in Production Example 1 were performed except that the amount of the hydrogenated polybutadiene polyol (A1) was changed to 66.97 parts by mass, the amount of dimethylolpropionic acid was changed to 6.14 parts by mass, the amount of hydrogenated MDI was changed to 25.89 parts by mass, the amount of sodium hydroxide was changed to 1.83 parts by mass, and the amount of diethylenetriamine was changed to 0.63 parts by mass, to obtain an aqueous dispersion of polyurethane sodium salt having a non-volatile content of about 32 mass% (binder 7).

### (Production Example 8: binder 8)

The same procedures as in Production Example 1 were performed except that the amount of the hydrogenated polybutadiene polyol (A1) was changed to 71.39 parts by mass, the amount of dimethylolpropionic acid was changed to 2.19 parts by mass, the amount of hydrogenated MDI was changed to 26.06 parts by mass, the amount of sodium hydroxide was changed to 0.65 parts by mass, and the amount of diethylenetriamine was changed to 2.32 parts by mass, to obtain an aqueous dispersion of polyurethane sodium salt having a non-volatile content of about 32 mass% (binder 8).

### (Comparative Production Example 1: binder C1)

The same procedures as in Production Example 1 were performed except that 69.17 parts by mass of the hydrogenated polybutadiene polyol (A1) was replaced by 69.76 parts by mass of polybutadiene polyol, the amount of hydrogenated MDI was changed to 25.47 parts by mass, the amount of dimethylolpropionic acid was changed to 4.10 parts by mass, the amount of sodium hydroxide was changed to 1.22 parts by mass, and the amount of diethylenetriamine was changed to 1.28 parts by mass, to obtain an aqueous dispersion of polyurethane sodium salt having a non-volatile content of about 32 mass% (binder C1).

### (Comparative Production Example 2: binder C2)

The same procedures as in Production Example 1 were performed except that 1.24 parts by mass of sodium hydroxide was replaced by 2.12 parts by mass of a 25 mass% aqueous ammonia solution, the amount of the hydrogenated polybutadiene polyol (A1) was changed to 69.28 parts by mass, and the amount of hydrogenated MDI was changed to 26.01 parts by mass, to obtain an aqueous dispersion of polyurethane ammonium salt having a non-volatile content of about 32 mass% (binder C2).

### (Comparative Production Example 3: binder C3)

The same procedures as in Production Example 1 were performed except that 4.17 parts by mass of dimethylolpropionic acid was replaced by 4.24 parts by mass of dimethylolbutanoic acid, 1.24 parts by mass of sodium hydroxide was replaced by 1.61 parts by mass of potassium hydroxide, the amount of the hydrogenated polybutadiene polyol (A1) was changed to 68.83 parts by mass, the amount of hydrogenated MDI was changed to 25.84 parts by mass, and the amount of diethylenetriamine was changed to 1.47 parts by mass, to obtain an aqueous dispersion of polyurethane potassium salt having a non-volatile content of about 32 mass% (binder C3).

### (Comparative Production Example 4: binder C4)

The same procedures as in Production Example 1 were performed except that 1.24 parts by mass of sodium hydroxide was replaced by 1.74 parts by mass of potassium hydroxide, the amount of the hydrogenated polybutadiene polyol (A1) was changed to 68.83 parts by mass, the amount of hydrogenated MDI was changed to 25.84 parts by mass, the amount of dimethylolpropionic acid was changed to 4.15 parts by mass, and the amount of diethylenetriamine was changed to 1.47 parts by mass, to obtain an aqueous dispersion of polyurethane potassium salt having a non-volatile content of about 32 mass% (binder C4).

### (Comparative Production Example 5: binder C5)

The same procedures as in Production Example 1 were performed except that 1.24 parts by mass of sodium hydroxide was replaced by 3.07 parts by mass of triethylamine, the amount of the hydrogenated polybutadiene polyol (A1) was changed to 67.51 parts by mass, the amount of hydrogenated MDI was changed to 25.35 parts by mass, the amount of dimethylolpropionic acid was changed to 4.07 parts by mass, and the amount of diethylenetriamine was changed to 1.44 parts by mass, to obtain an aqueous dispersion of polyurethane triethylamine salt having a non-volatile content of about 32 mass% (binder C5).

### (Comparative Production Example 6: binder C6)

The same procedures as in Production Example 1 were performed except that 69.17 parts by mass of hydrogenated polybutadiene polyol (A1) was replaced by 69.17 parts by mass of polyisoprene polyol and the amount of diethylenetriamine was changed to 2.31 parts by mass, to obtain an aqueous dispersion of polyurethane sodium salt having a non-volatile content of about 32 mass% (binder C6).

### [Evaluation of polyurethane aqueous dispersions]

For the obtained binders 1 to 8 and binders C1 to 6, the constituent components of the polyurethanes will be described in Table 1. In Table 1, for the carboxylic acids of the component (C), the compound names and the contents of neutralized salts are described. For the binders 1 to 8 and the binders C1 to 6, the acid values of the polyurethanes and the average particle sizes of the polyurethane aqueous dispersions were measured. The measurement methods are as follows.

·Acid values of polyurethanes: measured in accordance with JIS K0070-1992
·Average particle sizes of polyurethane aqueous dispersions: measured with "Microtrac UPA-UZ152" manufactured by NIKKISO CO., LTD., and calculated as particle sizes corresponding to a cumulative value of 50%, namely, d50 (median diameters).

**[Table 1]**

| | Production Example | | | | | | | | Comparative Production Example | | | | | |
|---|---|---|---|---|---|---|---|---|---|---|---|---|---|---|
| | 1 | 2 | 3 | 4 | 5 | 6 | 7 | 8 | 1 | 2 | 3 | 4 | 5 | 6 |
| Binder No. | 1 | 2 | 3 | 4 | 5 | 6 | 7 | 8 | C1 | C2 | C3 | C4 | C5 | C6 |
| Composition of polyurethane (parts by mass) | | | | | | | | | | | | | | |
| Hydrogenated MDI | 25.97 | | | 25.97 | 25.99 | 25.97 | 25.89 | 26.06 | 25.47 | 26.01 | 25.84 | 25.84 | 25.35 | 25.97 |
| IPDI | | 25.97 | | | | | | | | | | | | |
| HDI | | | 25.97 | | | | | | | | | | | |
| Hydrogenated polybutadiene polyol (A1) | 69.17 | 69.17 | 69.17 | | 69.22 | 69.17 | 66.97 | 71.39 | | 69.28 | 68.83 | 68.83 | 67.51 | |
| Hydrogenated polybutadiene polyol (A2) | | | | 69.17 | | | | | | | | | | |
| Polybutadiene polyol | | | | | | | | | 69.76 | | | | | |
| Polyisoprene polyol | | | | | | | | | | | | | | 69.17 |
| Sodium dimethylolpropionate | 4.86 | 4.86 | 4.86 | 4.86 | | 4.86 | 7.14 | 2.55 | 4.77 | | | | | 4.86 |
| Sodium dimethylolbutanoate | | | | | 4.79 | | | | | | | | | |
| Ammonium dimethylolpropionate | | | | | | | | | | 4.71 | | | | |
| Potassium dimethylolbutanoate | | | | | | | | | | | 5.33 | | | |
| Potassium dimethylolpropionate | | | | | | | | | | | | 5.33 | | |
| | | | | | | | | | | | | | 7.14 | |
| Diethylenetriamine | 1.48 | 2.57 | 4.9 | 2.94 | 2.26 | | 0.63 | 2.32 | 1.28 | 1.48 | 1.47 | 1.47 | 1.44 | 2.31 |
| Ethylenediamine | | | | | | 1.29 | | | | | | | | |
| Acid value of polyurethane (mgKOH/g) | 17 | 17 | 17 | 17 | 16 | 17 | 26 | 9 | 17 | 18 | 16 | 17 | 17 | 17 |
| Average particle size of aqueous dispersion (µm) | 0.04 | 0.04 | 0.05 | 0.1 | 0.04 | 0.04 | 0.03 | 0.15 | 0.04 | 0.04 | 0.04 | 0.04 | 0.04 | 0.03 |

### [Production of lithium secondary battery]

### (Example 1)

(Production of negative electrode) A negative-electrode active material being 88.85 parts by mass of SiO (average particle size: 4.5 µm, specific surface area: 5.5 m²/g), conductive agents being 40 parts by mass of the fibrous nanocarbon aqueous dispersion 1 and 4.0 parts by mass of the acetylene black aqueous dispersion, a thickener being 43.3 parts by mass of a 1.5 mass% aqueous solution of carboxymethylcellulose sodium salt, 30 parts by mass of the binder 1 being the aqueous dispersion of polyurethane sodium salt, and 14 parts by mass of ion-exchanged water were used; these were mixed together with a planetary mixer to prepare negative-electrode slurry such that the solid content became 49 mass%. A current collector being an electrodeposited copper foil having a thickness of 10 µm was used; a negative-electrode mixture layer formed from the negative-electrode slurry was formed on the electrodeposited copper foil. Specifically, the negative-electrode slurry was applied onto the electrodeposited copper foil by a coating machine; the copper foil was subjected to roll press treatment and to drying under reduced pressure at 130°C, to thereby obtain a negative electrode having 2.7 mg/cm² of the negative-electrode active material.

(Production of positive electrode) A positive-electrode active material being 92 parts by mass of LiNiCoAlO₂ (NCA), a conductive agent being 4 parts by mass of acetylene black (manufactured by Denka Company Limited, "Li-400"), a binder being 4 parts by mass of polyvinylidene fluoride, a dispersion medium being 49.2 parts by mass of N-methyl-2-pyrrolidone were mixed together with a planetary mixer, to prepare positive-electrode slurry such that the solid content became 67 mass%. This positive-electrode slurry was applied, using a coating machine, onto an aluminum foil having a thickness of 15 µm; the aluminum foil was dried at 130°C and subsequently subjected to roll press treatment, to obtain a positive electrode having 16.6 mg/cm² of the positive-electrode active material.

(Production of battery) The negative electrode and the positive electrode obtained above were combined together and stacked such that a separator being a polyolefin-based (PE/PP/PE) separator was disposed between the electrodes; to the positive and negative electrodes, a positive electrode terminal and a negative electrode terminal were ultrasonically welded. This stack was placed into an aluminum laminate package and the package was heat-sealed except for an opening for liquid injection. A pre-injection battery having a positive-electrode area of 18 cm² and a negative-electrode area of 19.8 cm² were produced. Subsequently, an electrolyte solution prepared by dissolving LiPF₆ (1.0 mol/L) in a solvent mixture of ethylene carbonate and diethyl carbonate (in a vol ratio of 30/70) was injected and the opening was heat-sealed to obtain a battery for evaluation.

### (Examples 2 to 8 and Comparative Examples 1 to 6)

The same procedures as in Example 1 were performed except that, in the preparation of the negative-electrode slurry, the binders employed were binders 2 to 8 and C1 to 6 in Table 2 below, to produce negative electrodes and further to produce batteries for evaluation.

### (Example 9)

The same procedures as in Example 1 were performed except that, in the preparation of the negative-electrode slurry, the conductive agents employed were 40 parts by mass of the fibrous nanocarbon aqueous dispersion 2 and 4 parts by mass of the acetylene black aqueous dispersion, to produce a negative electrode and further to produce a battery for evaluation.

### [Evaluation]

For the produced negative electrodes, bindability was evaluated. In addition, for the batteries for evaluation, in order to examine the effect of reducing swelling of electrodes, an electrode swelling ratio (first time) and an electrode swelling ratio (second time) after charging and discharging were measured. In addition, for the batteries for evaluation, whether or not gas generation occurred, cell impedance, and charging-discharging cycle performance were measured and evaluated. The test methods are as follows.

### (Bindability)

Such a negative electrode was cut into dimensions of 3 × 6 cm; this sample was folded by 180° into dimensions of 3 × 3 cm such that the coated surface was positioned inside, and unfolded; the degree of coming off of the active material from the coated surface (the length of the coming-off portion relative to the folded portion) was visually evaluated. The evaluation grades are as follows.

### Evaluation grades:

5 points: a coming-off ratio of 0% (no coming-off)
4 points: a coming-off ratio of 5% or less (the electrodeposited copper foil is slightly seen)
3 points: a coming-off ratio of more than 5% and less than 25%
2 points: a coming-off ratio of more than 25% and less than 50%
1 point: a coming-off ratio of 50% or more (coming-off occurs also in the region around the folded portion)

### (Electrode swelling ratio)

The thickness of the negative electrode during assembly of such a battery for evaluation, the thickness of the battery before charging (pre-charging cell thickness), and the thicknesses of the battery after charging-discharging processes (post-evaluation cell thicknesses) were measured using a micrometer, and the following formulas were used to perform calculations. Electrode swelling ratio = (Post-evaluation cell thickness - Pre-charging cell thickness)/Thickness of negative-electrode mixture layer × 100% Thickness of negative-electrode mixture layer = Thickness of negative electrode - Thickness of copper foil

The charging-discharging conditions will be described below and the electrode swelling ratios were measured after the first charging-discharging process and after the second charging-discharging process.

Charging-discharging conditions: CC (constant current) charging at a current density corresponding to 0.2 C was performed to 4.2 V and subsequently, at 4.2 V, switched to CV (constant voltage) charging, which was performed to a current density corresponding to 0.02 C. For the discharging, CC (constant current) discharging at a current density corresponding to 0.2 C was performed to 2.7 V.

### (Gas generation)

The batteries for evaluation were subjected to initial charging under the same charging conditions as in the measurement of the electrode swelling ratios, and subsequently opened and sealed under a reduced pressure. At this time, batteries in which amine odor, which is not the odor of the electrolyte solution, was detected were evaluated as "Occurred" for gas generation whereas batteries in which amine odor was not detected were evaluated as "Not occurred" for gas generation.

### (Cell impedance)

The batteries for evaluation having been subjected to initial charging under the same charging conditions as in the measurement of the electrode swelling ratios were subjected to measurement of cell impedance (mΩ) at a frequency of 1 kHz using an AC milliohm HiTESTER (manufactured by HIOKI E.E. CORPORATION, "3560").

### (Charging-discharging cycle performance)

The batteries for evaluation were subjected to a charging-discharging cycle test using a charging-discharging apparatus under the following conditions. CC (constant current) charging at a current density corresponding to 1 C was performed to 4.2 V and subsequently switched, at 4.2 V, to CV (constant voltage) charging, which was performed for 1.5 hours or to a current density of 0.1 C; and CC discharging at a current density corresponding to 1 C was performed to 2.7 V. This cycle was performed at 20°C 200 times; the ratio of the discharging capacity at 1 C after 200 cycles to the discharging capacity at 1 C in the initial cycle was determined as the charging-discharging cycle retention (%). The intervals between charging and discharging were set to 10 minutes.

**[Table 2]**

| | Example | | | | | | | | | Comparative Example | | | | | |
|---|---|---|---|---|---|---|---|---|---|---|---|---|---|---|---|
| | 1 | 2 | 3 | 4 | 5 | 6 | 7 | 8 | 9 | 1 | 2 | 3 | 4 | 5 | 6 |
| Binder No. | 1 | 2 | 3 | 4 | 5 | 6 | 7 | 8 | 1 | C1 | C2 | C3 | C4 | C5 | C6 |
| Fibrous nanocarbon aqueous dispersion No. | 1 | 1 | 1 | 1 | 1 | 1 | 1 | 1 | 2 | 1 | 1 | 1 | 1 | 1 | 1 |
| Evaluation of bindability | 5 | 4 | 5 | 4 | 4 | 5 | 4 | 5 | 5 | 2 | 3 | 2 | 2 | 4 | 4 |
| Electrode swelling ratio (first time) [%] | 100 | 107 | 108 | 102 | 100 | 100 | 103 | 100 | 101 | 135 | 115 | 124 | 123 | 115 | 137 |
| Electrode swelling ratio (second time) [%] | 100 | 107 | 108 | 102 | 100 | 100 | 103 | 100 | 101 | 139 | 118 | 126 | 125 | 119 | 145 |
| Gas generation | Not occurred | Not occurred | Not occurred | Not occurred | Not occurred | Not occurred | Not occurred | Not occurred | Not occurred | Not occurred | Occurred | Not occurred | Not occurred | Occurred | Not occurred |
| Cell impedance [mΩ] | 120 | 122 | 120 | 120 | 121 | 120 | 119 | 120 | 119 | 130 | 121 | 125 | 125 | 122 | 122 |
| Charging-discharging cycle performance [%] | 89 | 85 | 85 | 89 | 88 | 89 | 87 | 88 | 84 | 48 | 77 | 65 | 58 | 74 | 35 |

The results are described in Table 2. In Comparative Example 1 in which the binder employed was the aqueous dispersion of polyurethane synthesized using nonhydrogenated polybutadiene polyol, the negative electrode had high swelling ratios during charging and discharging. In addition, in Comparative Example 1, the negative electrode had poor bindability due to the binder. Also in Comparative Example 6 in which the binder employed was the aqueous dispersion of polyurethane synthesized using isoprene polyol, the negative electrode had high swelling ratios during charging and discharging.

In Comparative Examples 2 to 5 in which the binders being the polyurethanes that were not sodium salts but potassium salts or amine salts, the negative electrodes had high swelling ratios during charging and discharging. In addition, in Comparative Examples 2 and 5 in which the polyurethanes were amine salts, gas was generated and the odor was detected during charging and discharging. In Comparative Examples 3 and 4 in which the polyurethanes were potassium salts, the bindability due to the binders was poor.

By contrast, in Examples 1 to 9, the binders provided high bindability, the electrode swelling ratios (first time) and the electrode swelling ratios (second time) during charging and discharging were low relative to Comparative Example 1, and swelling of the negative electrodes due to charging and discharging was reduced. In addition, gas was not generated during charging and discharging, the cell impedance was low, and high charging-discharging cycle performance was provided.

Note that, for various numerical ranges described in the Description, the upper limit values and the lower limit values can be appropriately combined, and all such combinations are regarded as being described in the Description as preferred numerical ranges. The numerical ranges described in the form of "X to Y" mean X or more and Y or less.

Some embodiments of the present invention have been described so far. These embodiments are described as examples and are not intended to limit the scope of the invention. These embodiments can also be carried out in various other forms and various omissions, replacements, and changes can be performed without departing from the spirit and scope of the invention. These embodiments and their omissions, replacements, changes, and the like are included in the scope and spirit of the invention and similarly included in the invention described in Claims and the range of equivalents.

## Claims

1. An electrode binder for a lithium secondary battery, the electrode binder comprising an aqueous dispersion of a polyurethane sodium salt obtained by causing a reaction of (A) at least one of an aliphatic polyisocyanate or an alicyclic polyisocyanate, (B) a hydrogenated polybutadiene polyol, (C) a carboxylic acid having one or more active hydrogen groups, and (D) a chain extender.

2. The electrode binder according to claim 1, being used for a negative electrode of a lithium secondary battery containing SiO as a negative-electrode active material.

3. An electrode binder composition for a lithium secondary battery, the electrode binder composition comprising:
a polyurethane sodium salt obtained by causing a reaction of (A) at least one of an aliphatic polyisocyanate or an alicyclic polyisocyanate, (B) a hydrogenated polybutadiene polyol, (C) a carboxylic acid having one or more active hydrogen groups, and (D) a chain extender;
a conductive agent; and
water.

4. The electrode binder composition according to claim 3, wherein the conductive agent contains fibrous nanocarbon.

5. A negative electrode of a lithium secondary battery, the negative electrode comprising the electrode binder according to claim 1 or a solid content of the electrode binder composition according to claim 3, and a negative-electrode active material containing SiO.

6. The negative electrode according to claim 5, comprising fibrous nanocarbon as a conductive agent.

7. A lithium secondary battery comprising the negative electrode according to claim 5.
